# EUROPÄISCHE PATENTSCHRIFT

(11) **EP 4 345 555 B1**
(45) Veröffentlichungstag und Bekanntmachung des Hinweises auf die Patenterteilung: **11.12.2024**
(21) Anmeldenummer: 22205851.3
(22) Anmeldetag: 07.11.2022
(51) Int. Cl.: G05B 19/418

(54) **EIN VERFAHREN ZUR COMPUTER-GESTÜTZTEN PRÜFUNG UND DOKUMENTATION EINER INSTALLATIONSHANDLUNG EINES BENUTZERS ZUR INSTALLATION VON RÄUMLICH DEZENTRAL ANGEORDNETEN KOMPONENTEN EINER MASCHINE**
A METHOD FOR COMPUTER-ASSISTED VERIFICATION AND DOCUMENTATION OF A USER'S INSTALLATION ACTION FOR INSTALLING DECENTRALISED COMPONENTS OF A MACHINE
PROCÉDÉ DE CONTRÔLE ASSISTÉ PAR ORDINATEUR ET DOCUMENTATION D'UNE ACTION D'INSTALLATION D'UN UTILISATEUR POUR INSTALLER DES COMPOSANTS D'UNE MACHINE AGENCÉS DE MANIÈRE SPATIALE

(30) Priorität: 30.09.2022 EP 22199162
(43) Veröffentlichungstag der Anmeldung: 03.04.2024
(73) Patentinhaber: Murrelektronik GmbH, 71570 Oppenweiler (DE)
(72) Erfinder: Pfestorf, Sebastian, 71570 Oppenweiler (DE); Zeller, Paul, 74223 Flein (DE)
(74) Vertreter: Bösherz Goebel Patentanwälte

(56) Entgegenhaltungen:
- EP-A2- 1 764 596
- EP-A2- 2 085 849
- WO-A1-2022/020787
- US-A1- 2015 227 943

## Beschreibung

### Technisches Gebiet

Die vorliegende Erfindung betrifft allgemein das Gebiet der Planung und Montage von Maschinen wie Automatisierungsanlagen, und insbesondere eine computer-gestützte Installation von räumlich dezentral angeordneten, elektrischen Komponenten einer Maschine.

### Hintergrund

Die Komplexität und Vielfalt von Automatisierungsanlagen, die entwickelt, geplant, installiert, gewartet, und repariert werden müssen, wird zunehmend größer. In allen Phasen des Lebenszyklus einer solchen Anlage wie der Entwicklung/Planung, Produktion, Inbetriebsetzung, Betrieb und Wartung wird eine effiziente und effektive Unterstützung für einen Installateur oder Planer durch eine umfangreiche und vor allem vollständige Dokumentation wichtiger.

Bei der Installation kann es notwendig sein, dass bestimmte Anforderungen bei der Elektroinstallation erfüllt werden. So ist es beispielsweise erforderlich, dass eine Verbindung staubdicht oder wasserfest ist. Um diese Anforderungen zu gewährleisten, muss eine Verschraubung mit einem festgelegten Anzugsmoment vorgenommen werden. Eine Überprüfung dieser Verschraubung kann bereits bei einigen wenigen zu prüfenden Verbindungen sehr zeitaufwendig sein oder erfordert eine besondere fachliche und häufig schwer verfügbare Expertise.

Im Stand der Technik ist die Verwendung von Prüfmitteln zur Erfassung von Messwerten bekannt. So offenbart beispielsweise die DE 198 49 293 A1 ein System zum Erfassen von Messwerten an einer Vielzahl von Messstellen eines Messobjekts in einer Prüfeinrichtung. Dabei ist ein Drehmomentschlüssel als Messvorrichtung zum Messen einer Messgröße vorgesehen, welcher eine Sendeeinrichtung zum Senden des Messergebnisses sowie einer der Messstelle zugeordneten Kennung an eine Auswertungseinrichtung aufweist. Die Auswertungseinrichtung wertet die empfangenen Messergebnisse hinsichtlich des Vorliegens eines vorbestimmten Zustands des Messobjekts aus.

WO 2022/020787 A1 offenbart eine iterativ geleitete Demontage und Montage für ein elektrisches Gerät (Schaltschrank). US 2015/227943 A1 beschreibt ein computer-implementiertes Verfahren zur Dokumentation der Konformität mit gesetzlichen Vorschriften bei der Herstellung.

Nachteilhaft bei den bekannten Lösungen ist, dass solche Prüfungen zeitaufwändig und die Überprüfung von bestimmten technischen Anforderungen bei der Installation häufig noch fehlerhaft sein können.

Es ist daher eine Aufgabe, die der Erfindung zugrunde liegt, ein computer-gestütztes Verfahren und ein System bereitzustellen, um eine einfachere, schnellere, sichere und fehlerfreie Installation von elektrischen Komponenten zu ermöglichen und dabei die oben genannten Nachteile des Standes der Technik zumindest teilweise zu überwinden.

### Beschreibung der Erfindung

Die voranstehende Aufgabe wird gelöst durch ein Verfahren, Computerprogramm sowie eine Vorrichtung zur Datenverarbeitung gemäß den unabhängigen Patentansprüchen. Weitere Merkmale und Details der Erfindung ergeben sich aus den jeweiligen Unteransprüchen, der Beschreibung und den Zeichnungen.

Gegenstand der Erfindung ist ein Verfahren zur computer-gestützten Prüfung und Dokumentation einer Installationshandlung eines Benutzers zur Installation von, räumlich dezentral angeordneten, elektrischen, Komponenten einer Maschine, wobei eine vollständige Herstellung einer elektrischen und/oder mechanischen Verbindung eines Installationselements, geprüft und dokumentiert wird, Die Maschine kann als wenigstens eine der nachfolgend genannten Maschinen ausgebildet sein:
- Eine Automatisierungsanlage,
- Eine Produktionsanlage,
- Eine Logistikanlage,
- Eine Produktionsstraße,
- Ein Bearbeitungszentrum,
- Ein Industrieroboter,
- Eine Fertigungsanlage,
- Ein Aggregat,
- Ein Elektrogerät.

Insbesondere kann die Maschine dabei als eine Maschine mit modularem Charakter oder auch als mobile oder bewegliche Maschine ausgebildet sein, bei welcher einzelne Teile der Maschine modular gemäß einer Installationsvorgabe installiert werden. Diese Installation erfolgt zumindest teilweise manuell durch einen Benutzer wie einem Werker.

Die Komponenten können Module und insbesondere Verbindungsmodule sein, welche eine dezentrale und modulare Verbindung von Installationselementen ermöglichen. Dezentral kann sich dabei darauf beziehen, dass die Module bzw. Verbindungsmodule zumindest teilweise einen zentralen Schaltschrank ersetzen, indem die Module bzw. Verbindungsmodule zwar jeweils nur einen Teil der Verbindungen für die Maschine bereitstellen, diese Verbindungen aber dezentral im Feld ermöglichen. Bei einer zentralen Topologie, also bspw. einem zentralisierten Schaltschrankkonzept, wird insbesondere von einer Punkt-zu-Punkt-Verbindung gesprochen, d.h. der Startpunkt, die Verbindung und der Endpunkt sind klar definiert. Im Gegensatz dazu ist es bei dezentralen Anwendungen möglich, bzw. kann sogar oftmals notwendig sein, zwischen dem Startpunkt und dem Endpunkt mehrere Komponenten anzuordnen oder zu verbinden. In diesem Fall kann z. B. von einer Modul-Modul oder Modul-Hub-Punkt-Verbindung gesprochen werden.

Es können grundsätzlich bei einer Maschine bspw. auch die folgenden Komponenten vorgesehen sein: Geräte wie Aktoren und/oder Sensoren, die Verbindungsmodule und Installationselemente, bspw. zur Verkabelung. Vorzugsweise kann somit die vollständige Herstellung der elektrischen und/oder mechanischen Verbindung des Installationselements mit der Komponente in der Form eines Moduls wie eines Verbindungsmoduls, aber auch in der Form eines weiteren Installationselements wie eines Steckverbinders geprüft, validiert und dokumentiert werden. Dabei kann die Verbindung bspw. eine Verbindung des Installationselements in der Form eines Steckverbinders mit dem weiteren Installationselement in der Form eines Steckverbinders oder T-Stücks oder dergleichen sein. Die Komponenten und/oder die Installationselemente können dabei als elektrische, dezentrale Komponenten ausgeführt sein, da eine dezentrale Verschaltung mittels der Verbindungsmodule vorgesehen ist.

Das erfindungsgemäße Verfahren kann dabei die nachfolgenden Schritte umfassen, welche vorzugsweise nacheinander oder in beliebiger Reihenfolge ausgeführt werden, wobei die Schritte auch automatisiert und/oder wiederholt ausgeführt werden können:
- Empfangen wenigstens eines Messwertes von einem Prüfmittel, wobei der wenigstens eine Messwert aus einer Erfassung einer Messgröße resultiert, welche für die Installationshandlung spezifisch ist, ,
- Validieren der Installationshandlung des Benutzers hinsichtlich der vollständigen Herstellung der elektrischen und/oder mechanischen Verbindung des Installationselements, auf Basis eines Vergleichs des wenigstens einen empfangenen Messwertes mit mindestens einer Messwertvorgabe, um festzustellen, ob eine Konformität des wenigstens einer empfangenen Messwertes mit der mindestens einen Messwertvorgabe gewährleistet ist; und
- Dokumentieren der validierten Installationshandlung basierend auf dem Validieren dadurch, dass eine Kennzeichnung für die Verbindung in einer Installationsvorgabe vorgenommen wird, nämlich in einem Schaltplan, wobei bei dem Dokumentieren der validierten Installationshandlung die Kennzeichnung in Abhängigkeit von einem Ergebnis des Validierens definiert wird, und ein Vorliegen und/oder ein Ausmaß , der Herstellung der elektrischen und/oder mechanischen Verbindung und/oder einer fehlerhafte und/oder von einer Vorgabe abweichenden Durchführung der Installationshandlung angibt.

Damit ermöglicht das Verfahren eine schnellere und fehlerfreie Installation und kann einen Benutzer bei einer Installation der Maschine wesentlich unterstützen und den Prozess qualitativ verbessern. Des Weiteren ermöglicht dies eine einfachere und effizientere Prüfung der Installationshandlung hinsichtlich der jeweils gültigen oder erforderlichen Anforderungen an verwendete Materialien oder die Verbindung, beispielsweise bezüglich Vorgaben aus Standards oder an Normen. Ferner hat dies den Vorteil, dass mögliche Sicherheitsrisiken bei der durchgeführten Installationshandlung im Rahmen der Installation von Maschinen deutlich gemindert werden. Weiter ferner werden die Anforderungen der bisher notwendigen Fachkompetenz für die Überprüfung deutlich reduziert. Die vorgegebene Messgröße kann dabei ein Referenzwert oder Grenzwert sein, welcher mit der übermittelten Messgröße als aktueller Messwert verglichen wird. Die Herstellung der Verbindung kann zum Beispiel dann als ordnungsgemäß und/oder vollständig gelten, wenn die übermittelte Messgröße eine vordefinierte Bedingung wie einem Überschreiten des Referenzwertes oder Grenzwertes erfüllt.

Darüber hinaus ermöglicht dies eine direkte Information des Benutzers bezüglich der Installationshandlung durch die hinterlegte Information der Installationsvorgabe, beispielsweise einem elektrischen Anschlussplan als Installationsdokumentation, dass die elektrische und/oder mechanische Verbindung des Installationselement vollständig hergestellt ist.

Ferner ermöglicht das Dokumentieren der Installationshandlung und/oder der Information des Installationselements und/oder der Komponente vorteilhafterweise eine ständige und dauerhafte Verfügbarkeit der dokumentierten und/oder hinterlegten Information für den Benutzer auch nach der ausgeführten Installationshandlung. Zudem hat dies den weiteren Vorteil, dass nach einer erfolgreichen Installation ein Installationselement automatisch erkannt und dokumentiert werden kann.

Ferner kann auf diese Weise ein System für die Installation, insbesondere zur Verkabelung des Installationselements mit der Komponente, zur geführten qualitativen Unterstützung des Benutzers bereitgestellt werden, bei welchem eine Datenverarbeitungsvorrichtung die Verfahrensschritte automatisiert ausführen kann. Die Datenverarbeitungsvorrichtung, insbesondere eine erfindungsgemäße Vorrichtung zur Datenverarbeitung, kann dabei vorteilhafterweise mit einzelnen Komponenten kommunizieren und damit die Ausgabe der Installationsinformation ermöglichen. Hierzu kann die Datenverarbeitungsvorrichtung wenigstens eine Schnittstelle für die Kommunikation aufweisen.

Ein Benutzer kann bspw. ein Installateur und/oder Anlagenmechaniker und/oder Elektriker und/oder Werker und/oder Planer und/oder mechanischer Konstrukteur oder Entwickler und/oder elektrischer Konstrukteur oder Entwickler und/oder SPS-Programmierer und/oder Inbetriebnehmer und/oder Instandhalter und/oder Maschinenführer sein. Es ist möglich, dass der Benutzer das erfindungsgemäße Verfahren dadurch verwendet, dass das Verfahren über einen Computer für den Benutzer bereitgestellt wird. Hierzu kann ein Computerprogramm zumindest teilweise durch den Computer und/oder einen weiteren Computer ausgeführt werden, um die erfindungsgemäßen Verfahrensschritte durchzuführen.

Als eine Hybridverbindung wird im Rahmen der Erfindung eine Verbindung verstanden, welche mittels einer Hybridleitung hergestellt wird. Dabei ermöglicht es die Hybridverbindung, dass elektrischer Strom wie eine Versorgungsspannung zusammen mit anderen Signalen übertragen werden können. Diese Leitungen können geschirmt und ungeschirmt sein.

Es kann ferner möglich sein, dass der Schritt des Validierens die nachfolgenden Schritte umfasst:
- Auswerten des Vergleichs des wenigstens einen empfangenen Messwertes mit der mindestens einen Messwertvorgabe; und
- Definieren eines Ergebnisses des Validierens basierend auf dem Auswerten des Vergleichs, wobei das Ergebnis die vollständige Herstellung oder eine unvollständige Herstellung der elektrischen und/oder mechanischen Verbindung des Installationselements und/oder eine fehlerhafte und/oder von einer Vorgabe abweichende Durchführung der Installationshandlung indiziert und/oder quantifiziert, wobei bei dem Dokumentieren der validierten Installationshandlung die Kennzeichnung für die Verbindung in der Installationsvorgabe basierend auf dem Ergebnis des Validierens vorgenommen wird.

Dies hat den Vorteil, dass die Einhaltung von Messwertvorgaben der Installationshandlung durch die Auswertung des Messwerts bezüglich der jeweils gültigen oder erforderlichen Anforderungen gewährleistet ist. Darüber hinaus ermöglicht die entsprechende Kennzeichnung eine unmittelbare Information des Benutzers bezüglich der Qualität der Installationshandlung für die Herstellung der Verbindung in der Installationsvorgabe.

Weiter ist im Rahmen der Erfindung denkbar, dass das Dokumentieren der validierten Installationshandlung die nachfolgenden Schritte umfasst, welche vorzugsweise nur dann ausgeführt werden, wenn das Ergebnis des Validierens die vollständige Herstellung der elektrischen und/oder mechanischen Verbindung des Installationselements und/oder eine ordnungsgemäße Durchführung der Installationshandlung indiziert:
- Identifizieren einer Anschlussstelle, durch welche die elektrische und/oder mechanische Verbindung durch die Installationshandlung hergestellt wurde, in der Installationsvorgabe;
- Hinterlegen der Kennzeichnung als eine Kennzeichnung der identifizierten und ordnungsgemäß verbundenen Anschlussstelle in der Installationsvorgabe, bevorzugt basierend auf einem vom Benutzer erfassten Installationsparameter, insbesondere einem Anlass oder Grund der Kennzeichnung, wobei vorzugsweise eine Angabe zum

Anlass oder Grund der Kennzeichnung mit hinterlegt wird. Vorteilhafterweise kann auf Basis der Installationshandlung die Validierung durchgeführt werden. Die Validierung ermöglicht damit die Beurteilung, ob der Benutzer die Installationshandlung richtig durchgeführt hat. Das Ergebnis der Validierung kann genutzt werden, um die Kennzeichnung in der Installationsvorgabe zu hinterlegen. Somit kann die Installationsvorgabe zu einem späteren Zeitpunkt genutzt werden, um zu überprüfen, ob vorgegebene Referenz- oder Grenzwerte in der Installationsvorgabe gefolgt worden ist. Dabei kann dem Benutzer die Möglichkeit bereitgestellt werden, bspw. über die Benutzeroberfläche und/oder eine Eingabevorrichtung wie eine Spracheingabe und/oder eine Tastatur und/oder eine Maus und/oder ein Touchscreen, einen entsprechenden Installationsparameter, insbesondere einem Anlass oder Grund der Kennzeichnung, einzugeben.

Nach einer weiteren Möglichkeit kann vorgesehen sein, dass das Dokumentieren der validierten Installationshandlung die nachfolgenden Schritte umfasst, welche durchgeführt werden, wenn ein Ergebnis des Validierens eine unvollständige Herstellung und/oder fehlerhafte und/oder von einer Vorgabe abweichende Durchführung der Installationshandlung indiziert:
- Identifizieren einer Anschlussstelle, durch welche die Verbindung durch die Installationshandlung hergestellt wurde, in der Installationsvorgabe;
- Hinterlegen der Kennzeichnung der Anschlussstelle als kontrollbedürftig in der Installationsvorgabe, bevorzugt basierend auf einem vom Benutzer erfassten Installationsparameter, insbesondere einer Beanstandung, einem Anlass oder Grund der Kennzeichnung, wobei vorzugsweise eine Angabe zum Anlass oder Grund der Kennzeichnung mit hinterlegt wird.

Dies hat den Vorteil, dass das Ergebnis der Validierung als unvollständige Herstellung und/oder fehlerhafte und/oder von einer Vorgabe abweichende Durchführung der Installationshandlung genutzt werden kann, um die entsprechende Kennzeichnung in der Installationsvorgabe zu hinterlegen. Somit kann die Installationsvorgabe zu einem späteren Zeitpunkt für eine Kontrolle genutzt werden, um zu überprüfen, ob und/oder warum bei der Installationshandlung von der Vorgabe abgewichen wurde. Sollte ein Benutzer bei der Installationshandlung von vorgegebenen Referenz- oder Grenzwerten abweichen, geschieht dies häufig aus einem relevanten Grund oder Anlass. Daher kann dem Benutzer die Möglichkeit bereitgestellt werden, bspw. über die Benutzeroberfläche und/oder eine Eingabevorrichtung wie eine Spracheingabe und/oder eine Tastatur und/oder eine Maus und/oder ein Touchscreen, einen entsprechenden Installationsparameter einzugeben.

Es ist ferner denkbar, dass ein weiterer Vergleich zwischen dem wenigstens einen empfangenen Messwert und zumindest zwei weiteren Messwertvorgaben, vorzugsweise eines Anzugsmoments und/oder Drucks, als zusätzliche Prüfbedingung stattfindet, um festzustellen, ob eine Konformität des wenigstens einen empfangenen Messwertes mit einer Vorgabe unter Berücksichtigung der zusätzlichen Prüfbedingung gewährleistet ist, wobei vorzugsweise die Kennzeichnung für die Verbindung in der Installationsvorgabe basierend auf dem weiteren Vergleich vorgenommen wird.

Dies ermöglicht eine deutlich flexiblere und präzisere Auswertung der Installationshandlung auf Basis von zwei Messwertvorgaben. Dies ermöglicht damit eine bessere Beurteilung, ob der empfangene Messwert innerhalb oder außerhalb des Bereichs der beiden Messwertvorgaben liegt und als Kennzeichnung in der Installationsvorgabe hinterlegt wird.

Weiter ist im Rahmen der Erfindung denkbar, dass das Dokumentieren der validierten Installationshandlung wenigstens eine Hinterlegung einer Angabe zum Zeitpunkt der ordnungsgemäßen Installationshandlung hinsichtlich der Herstellung der Verbindung, insbesondere Steckverbindung, mit einer Anschlussstelle, zu einem Identifikator des Installationselements, insbesondere einer Betriebsmittelkennzeichnung, und/oder zu einer Kennung des Benutzers umfasst.

Dies hat den Vorteil, dass eine Zuordnung von Installationshandlungen bei der Installation einer Maschine durch die umfassende Dokumentation in der Installationsvorgabe signifikant verbessert wird. Ferner ermöglicht dies eine bessere und schnellere Analyse und/oder Auswertung von Installationsprozessen auf Basis der dokumentierten Installationshandlungen.

Außerdem kann es im Rahmen der Erfindung von Vorteil sein, dass das Prüfmittel ein Drehmomentschlüssel, vorzugsweise ein elektronischer Drehmomentschlüssel, ist, um die Erfassung des Messwerts, vorzugsweise eines Anzugmoments, durch die Installationshandlung, insbesondere Verschraubung, bereitzustellen.

Des Weiteren kann vorgesehen sein, dass das Prüfmittel ein piezoelektrischer Sensor ist, wobei der piezoelektrische Sensor als Teil einer Steckverbindung integriert angeordnet ist, um die Erfassung des Messwerts, vorzugsweise eines Drucks, durch die Installationshandlung, insbesondere Verschraubung, bereitzustellen.

Ein weiterer Vorteil im Rahmen der Erfindung ist erzielbar, wenn das Validieren und/oder das Dokumentieren der validierten Installationshandlung durch das Empfangen des wenigstens einen Messwertes und/oder durch das Prüfmittel initiiert wird.

Dies ermöglicht, eine sichere und automatische Initialisierung der Validierung der Installationshandlung.

Ferner ist es optional vorgesehen, dass das Validieren und/oder das Dokumentieren der validierten Installationshandlung durch eine Benutzerhandlung, vorzugsweise durch eine Eingabe in einer mobilen Datenverarbeitungsvorrichtung wie einem mobilen Computer, initiiert wird.

Dies ermöglicht, dass eine sichere und kontrollierte Initialisierung der Validierung der Installationshandlung.

Gemäß einer vorteilhaften Weiterbildung der Erfindung kann vorgesehen sein, dass das Prüfmittel ein Werkzeug ist, mit welchem die Installationshandlung durch den Benutzer vorgenommen wird, um die mechanische und/oder elektrische Verbindung herzustellen oder wobei das Prüfmittel ein zusätzliches Werkzeug ist, welches zusätzlich zur Installationshandlung zur Prüfung der Installationshandlung verwendet wird. So ist es denkbar, dass ein Werkzeug für die Installationshandlung, z. B. zum Montieren, und das zusätzliche Werkzeug nicht für die Installationshandlung, aber zum Prüfen als Prüfmittel, verwendet wird. Alternativ ist es denkbar, dass das gleiche Werkzeug für die Installationshandlung aber auch als Prüfmittel verwendet wird.

Dies ermöglicht es, dass eine einfache und schnelle Erfassung des Messwerts durch das Prüfmittel gewährleistet wird.

Es kann ferner möglich sein, dass die Schritte für mehrere Installationshandlungen wiederholt durchgeführt werden, um sukzessive die gesamte Installation der Maschine zu dokumentieren.

Dies hat den Vorteil, dass eine effektive und fehlerfreie Gesamt-Dokumentation für alle erforderlichen Installationshandlungen deutlich schneller bereitgestellt werden kann.

Ebenfalls Gegenstand der Erfindung ist eine Vorrichtung zur Datenverarbeitung, umfassend Mittel zur Ausführung der Schritte des erfindungsgemäßen Verfahrens. Damit bringt die erfindungsgemäße Vorrichtung die gleichen Vorteile mit sich, wie sie ausführlich mit Bezug auf ein erfindungsgemäßes Verfahren beschrieben worden sind. Die Vorrichtung kann Teil zumindest oder genau einer der wenigstens einen Maschine sein.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Als der Computer kann eine Datenverarbeitungsvorrichtung, bspw. die erfindungsgemäße Vorrichtung, vorgesehen sein, welche das Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls ist es denkbar, dass der Computer zumindest einen integrierten Schaltkreis wie einen Mikroprozessor oder eine Anwendungsspezifische integrierte Schaltung (ASIC) oder ein Anwendungsspezifisches Standardprodukt (ASSP) oder einen digitalen Signalprozessor (DSP) oder einen Field Programmable Gate Array (FPGA) oder dergleichen umfasst. Der Computer kann ferner wenigstens eine Schnittstelle zum Datenaustausch, z. B. eine Ethernet-Schnittstelle oder eine Schnittstelle für LAN (Local Area Network) oder WLAN (Wireless Local Area Network) oder System-on-a-Chip (SoC) oder eine andere Funkschnittstelle wie Bluetooth oder Nahfeldkommunikation (NFC) aufweisen. Ferner kann der Computer als ein oder mehrere Steuergeräte, d. h. auch als ein System aus Steuergeräten, ausgeführt sein. Der Computer kann bspw. auch in einer Cloud und/oder als ein Server vorgesehen sein, um über die Schnittstelle die Datenverarbeitung für eine lokale Anwendung zur Verfügung zu stellen. Auch ist es möglich, dass der Computer als ein mobiles Gerät, wie ein Smartphone, ausgeführt ist.

Ebenfalls Gegenstand der Erfindung kann ein computerlesbares Speichermedium sein, welches das erfindungsgemäße Computerprogramm umfasst. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

### Kurzbeschreibung der Zeichnungen

Zum besseren Verständnis der Offenbarung wird auf die folgenden Zeichnungen verwiesen:
- Fig. 1:: Eine zentrale Verschaltung bei einer Maschine mittels eines Schaltschranks.
- Fig. 2:: Eine dezentrale Verschaltung gemäß Ausführungsbeispielen der Erfindung.
- Fig. 3: Eine schematische Darstellung von Teilen eines Systems gemäß Ausführungsbeispielen der Erfindung.
- Fig. 4: Eine schematische Darstellung von Einzelheiten eines Verfahrens gemäß Ausführungsbeispielen der Erfindung.
- Fig. 5: Eine schematische Darstellung von Schritten eines Verfahrens gemäß Ausführungsbeispielen der Erfindung.

### Beschreibung der Ausführungsbeispiele

Das Planen, Installieren und Einrichten von Maschinen sowie elektronischer Automatisierungstechnik ist eine komplexe Aufgabe. Dies gilt für zentralisierte Schaltschrank-Systeme ebenso, wie für dezentralisierte Systeme, in denen Steuerungsmodule direkt an den Anlagen angebracht werden. Die entsprechenden Prozesse werden von unterschiedlichen Personen, wie Anlagen-Planer, Elektro-Planer, Installateur, Anlagenprogrammierer etc. durchgeführt. Eine Besonderheit bei dezentralen Systemen ist die Verteilung der Module an verschiedenen Stellen einer Maschine im Vergleich zu den zentralisierten Schaltschrank-Systemen. Gerade bei größeren Maschinen kann eine simultane, das heißt zeitgleich parallel durch mehrere Benutzer ausgeführte Installation aus zeitlichen und logistischen Gründen vorteilhaft sein. Um einen reibungslosen Installationsprozess zu ermöglichen, soll der Arbeitsstand automatisch, benutzerindividuell und in Echtzeit digital dokumentiert werden. Über den ganzen Anlagen-Lebenszyklus ist es aus unterschiedlichen Gründen (wie z.B. Wartungsplanung, Systemdiagnosen) wichtig, über eine vollständige Dokumentation aller relevanten Informationen zu verfügen.

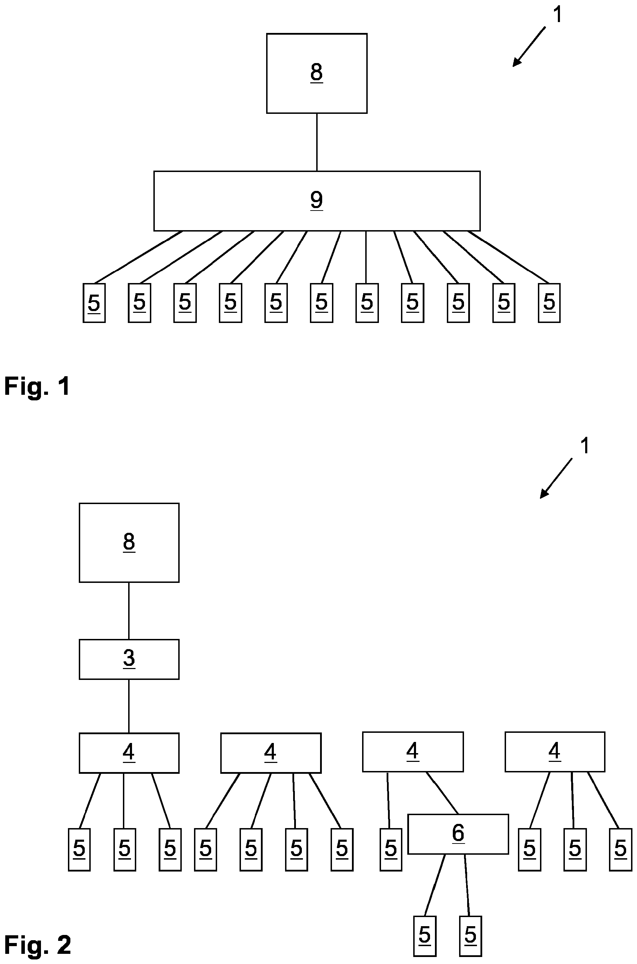

In Fig. 1 ist schematisch eine zentrale Verschaltung mittels eines Schaltschranks 9 dargestellt, um diese einer dezentralen Verschaltung mittels räumlich dezentral angeordneten, elektrischen Komponenten 4 einer Maschine 1 in Fig. 2 gegenüberzustellen. Anstelle einer Verbindung sämtlicher Geräte 5 wie Sensoren und Aktoren unmittelbar mit dem Schaltschrank 9 wie in Fig. 1 dargestellt, können bei der dezentralen Verschaltung in Fig. 2 mehrere Komponenten 4, also insbesondere Verbindungsmodule, eingesetzt werden. Diese ermöglichen, wie der Schaltschrank 9, eine Kopplung der Geräte 5 mit einer Steuerungsvorrichtung 8 wie einer SPS. Allerdings können die Verbindungsmodule 4 dezentral und verteilt in der Nähe zu den Geräte 5 vorgesehen sein. Die Verbindungsmodule 4 verschalten somit jeweils die Geräte 5 nur teilweise, wobei die Verbindungsmodule 4 zusammen oder beispielsweise ein und/oder mehrere Verbindungsmodule 4 über jeweils einen und/oder mehrere Hubs 6 die gesamte Verschaltung vornehmen. Um die Konfiguration und/oder Ansteuerung der Verbindungsmodule 4 zentral zu ermöglichen, kann ein Mastermodul 3 mehreren der einzelnen Verbindungsmodulen 4 vorgeschaltet sein. Ebenfalls ist es möglich, dass eine weitere Untergliederung der Verschaltung mittels wenigstens eines Hubs 6 erfolgt.

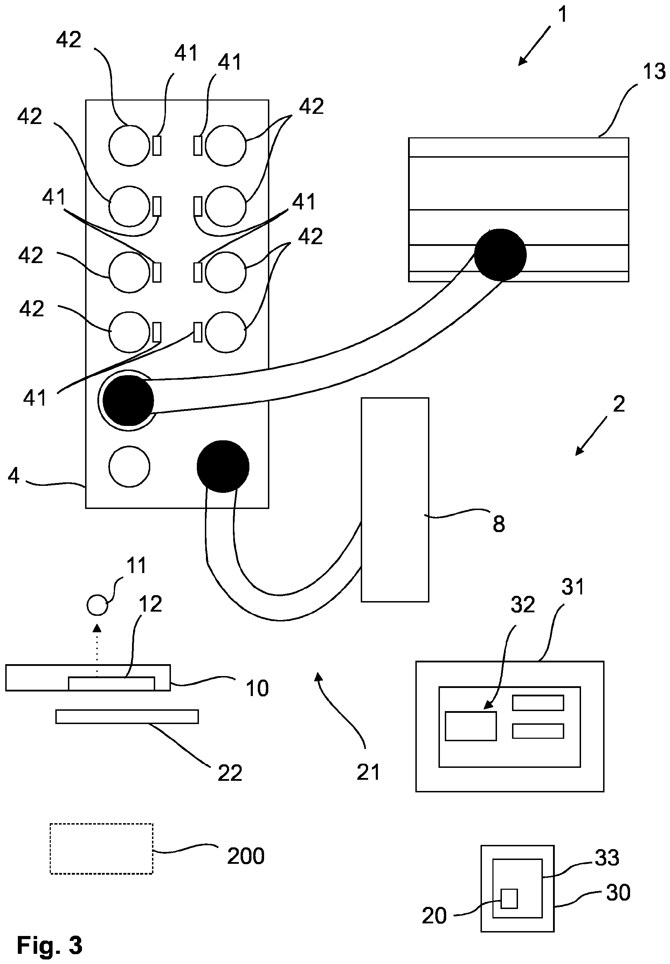

In Fig. 3 sind Teile eines Systems 2 gemäß Ausführungsbeispielen der Erfindung dargestellt, welches für eine computer-gestützte Installation von räumlich dezentral angeordneten elektrischen Komponenten 4 einer Maschine 1 vorgesehen sein kann. Das System 2 kann eine Detektionsvorrichtung 22, insbesondere einen Scanner 22 oder eine Kamera 22, für eine Bereitstellung eines Identifikators 11 eines Installationselements 10, vorzugsweise eines Kabels 11 oder eines Bauteils 11, umfassen. Ferner kann das System 2 wenigstens eine elektrische Komponente 4, vorzugsweise in der Form eines Verbindungsmoduls 4 zur Verbindung mit dem Installationselement 10 und weiteren Installationselementen 10, aufweisen. Ebenfalls kann eine Vorrichtung 30 zur Datenverarbeitung Teil des Systems 2 sein, wobei diese Datenverarbeitungsvorrichtung 30 Mittel zur Ausführung der Schritte eines Verfahren 100 gemäß Ausführungsbeispielen der Erfindung umfassen kann. Der Identifikator 11 kann in einem dem Installationselement 10 zugeordneten, insbesondere an diesem angeordneten, maschinenlesbaren Code 12 kodiert sein, wobei der maschinenlesbare Code 12 mittels der Detektionsvorrichtung 22 maschinenlesbar ausgeführt ist. Damit ist es für einen Benutzer möglich, mittels der Detektionsvorrichtung 22 den Code 12 einzuscannen und somit den Identifikator 11 an die Datenverarbeitungsvorrichtung 30 zu übertragen.

Ferner können die Komponenten 4 und wenigstens ein Computer 30, 31 und/oder eine Steuerungsvorrichtung 8 über ein Bussystem 21 jeweils zur bidirektionalen Kommunikation miteinander verbunden sein, wobei die bidirektionale Kommunikation auf Basis eines Kommunikationsprotokolls für ein Feldbussystem vorgesehen sein kann, insbesondere auf Basis eines ProfiNet-, Ethernet/IP- oder 802.3-Standards, und/oder die bidirektionale Kommunikation kabelgebunden über ein Bussystem 21 oder kabellos mittels Bluetooth oder WLAN, auf Basis eines Standards gemäß IEEE 802.11 oder auf Basis eines Mobilfunk-Telekommunikationsstandards vorgesehen sein kann. Um einen Betrieb der Komponente 4 zu ermöglichen, kann die Komponente 4 ferner mit einer Energieversorgung 13 verbunden sein.

Ferner ist ein Computerprogramm 20 dargestellt, welches Befehle umfasst, die bei der Ausführung des Programms durch einen Computer 30 diesen veranlassen, die Schritte des Verfahrens 100 gemäß Ausführungsbeispielen der Erfindung auszuführen.

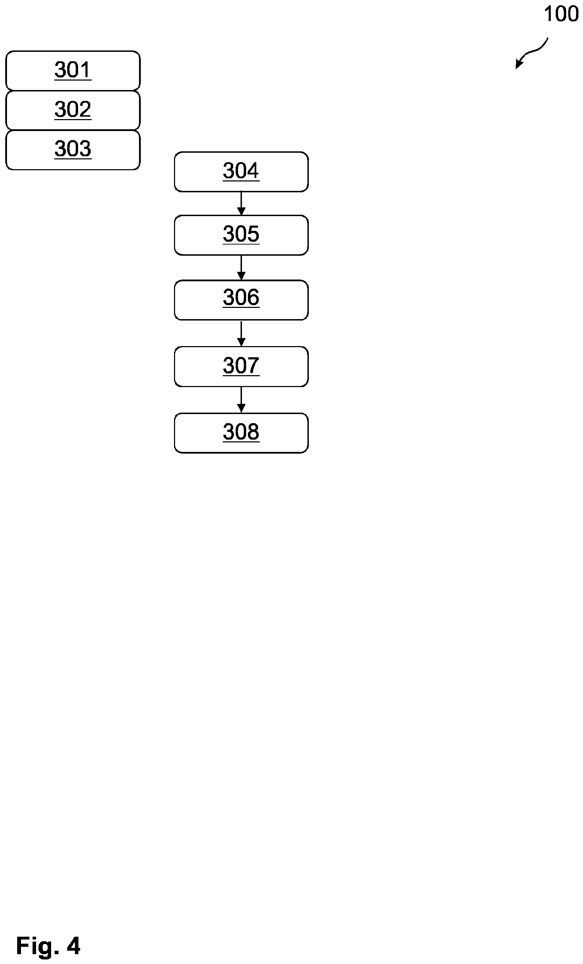

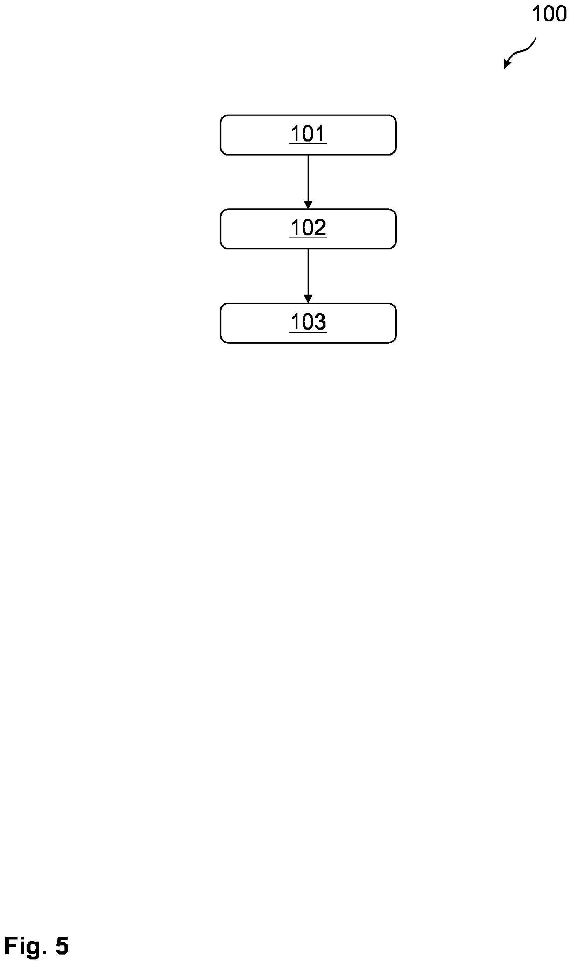

In Fig. 4 und 5 sind Verfahrensschritte des Verfahrens 100 visualisiert, bei welchem eine vollständige Herstellung einer elektrischen und/oder mechanischen Verbindung eines Installationselements, insbesondere eines Kabels und/oder eines Steckverbinders, mit einer der elektrischen Komponenten, insbesondere eines Moduls und/oder Geräts, geprüft und dokumentiert wird. Es kann gemäß einem in Fig. 5 dargestellten ersten Verfahrensschritt 101 ein Empfangen wenigstens eines Messwertes von einem Prüfmittel, insbesondere einem Drehmomentschlüssel und/oder einem piezoelektrischen Sensor, vorgesehen sein. Dabei resultiert der wenigstens eine Messwert aus einer Erfassung einer Messgröße, welche für die Installationshandlung spezifisch ist, insbesondere für eine ordnungsgemäße Verschraubung und/oder Stromverbindung und/oder Datenverbindung und/oder Signalverbindung und/oder Hybridverbindung und/oder Kontaktierung zwischen dem Installationselement und der elektrischen Komponente. Anschließend kann gemäß einem zweiten Verfahrensschritt 102 ein Validieren der Installationshandlung des Benutzers hinsichtlich der vollständigen Herstellung der elektrischen und/oder mechanischen Verbindung des Installationselements, insbesondere einer ordnungsgemäßen Verschraubung und/oder Stromverbindung und/oder Datenverbindung und/oder Signalverbindung und/oder Hybridverbindung und/oder Kontaktierung, auf Basis eines Vergleichs des wenigstens einen empfangenen Messwertes mit mindestens einer Messwertvorgabe erfolgen. Vorzugsweise kann hierdurch festgestellt werden, ob eine Konformität des wenigstens einen empfangenen Messwertes mit der mindestens einen Messwertvorgabe gewährleistet ist. Sodann kann gemäß einem dritten Verfahrensschritt 103 ein Dokumentieren der validierten Installationshandlung basierend auf dem Validieren dadurch erfolgen, dass eine Kennzeichnung für die Verbindung in einer Installationsvorgabe vorgenommen wird, insbesondere in einem Schaltplan und/oder Elektroanschlussplan.

Durch die Installationsdokumentation kann z. B. wenigstens einer der folgenden Informationen dokumentiert werden: Arbeitsschritte des Benutzers mit Zusatzinformationen zu den Arbeitsschritten wie eine Bearbeitungsdauer, an welcher Maschine wird gearbeitet, welcher Benutzer, beispielsweise welcher Installateur oder Monteur, hat wann die Tätigkeiten durchgeführt, welches Bauteil ist verdrahtet und/ oder verkabelt worden, ist der Montageschritt abgeschlossen, welcher Port/welche Anschlussstelle wurde verwendet, existieren offene Kabel und was sind die Eigenschaften des offenen Kabels, z.B. Länge, Umgebungsparameter, z.B. Temperatur, Luftfeuchtigkeit, aktueller Projektstand, Schutzklasse, z.B. IP67. Auch kann der Benutzer, insbesondere Werker, bei Abweichungen hinsichtlich der validierten Installationshandlungen den Anlass, Grund oder die Beanstandung eingeben. Die Installationsdokumentation kann bspw. in einer Datenbank hinterlegt werden. Ein Benutzer kann ggf. mit physischen Handlungen (Tastendruck, Bildschirm, Doppelklick) die Dokumentation auslösen. Das Hinterlegen der Installationsdokumentation ermöglicht dem Benutzer optional bereits installierte Installationselemente 10 oder Komponenten 4 mit Hilfe des erfindungsgemäßen Verfahrens 100 zu überprüfen. Dabei ist es möglich, dass die Installationselemente 10 oder Komponenten 4 auch hinsichtlich einer Tauglichkeit und/oder geänderten Umgebungsbedingungen und/oder Umwelteinflüssen und/oder technischen Anforderungen und/oder dergleichen geprüft werden.

In Fig. 4 ist ein Verfahren 100 gemäß Ausführungsbeispielen der Erfindung mit weiteren Einzelheiten visualisiert. Über einen in Fig. 3 dargestellten Computer 31, wie ein Tablet oder Laptop, kann ein Benutzer zunächst eine Nutzeranmeldung 301 durchführen. Hierzu kann der Nutzer eine grafische Benutzeroberfläche 32 nutzen, welche durch den Computer 31 bereitgestellt wird. Ebenfalls über die Benutzeroberfläche 32 kann eine Projektauswahl 302 erfolgen, durch welche bspw. eine Installationsvorgabe 200 für ein gewünschtes Projekt geladen wird. Damit ist es möglich, einen Beginn 303 für die Prüfung einer vollständigen Herstellung einer elektrischen und/oder mechanischen Verbindung des Installationselements 10 einzuleiten.

Zur Herstellung der Verbindung, insbesondere zur Verschraubung, kann optional ein elektronischer Drehmomentschlüssel als externes Prüfmittel verwendet werden. Für die Vorbereitung der Prüfung kann gemäß dem Verfahrensschritt 304 an dem Drehmomentschlüssel ein erforderliches Anzugsmoment als Referenzwert oder Grenzwert eingestellt werden. D. h., dass das für die Erreichung einer Normkonformität notwendige Anzugsmoment eingestellt werden kann. Eine Norm kann beispielsweise Anforderungen hinsichtlich der Einhaltung von bestimmten Schutzklassen bei der Elektroinstallation umfassen. So kann bspw. für die Herstellung einer vollständigen Verbindung die Konformität mit oder Einhaltung der Schutzklasse IP 67 vorgegeben werden, die u.a. beinhaltet, dass eine Feststellung einer Strom- und/oder Datenübertragung und eine Dokumentation der Einhaltung bzw. Konformität eines zuvor festgelegten Anzugsmoment erforderlich ist.

Optional kann in einer Steckverbindung zwischen dem Installationselement 10, und einem Gerät 5 oder einem Modul 4 ein piezoelektrischer Sensor integriert und verwendet werden, welcher die Erfassung 305 eines Drucks ermöglicht, der durch eine Verschraubung erzeugt werden kann.

Bei der Herstellung der Verbindung wird das Installationselement 10, z. B. das Kabel 10, mit einem Modul 4 oder Gerät 5 durch den Benutzer bei der Installationshandlung verbunden. Dabei wird bei Verfahrensschritt 305 durch die jeweils verwendeten Prüfmittel ein Messwert für ein Anzugsmoment oder einen Druck erfasst.

Bei der Erfassung des Messwerts kann das Prüfmittel optional bei Verfahrensschritt 306 ein Signal erzeugen, dass den Benutzer darüber informiert, dass der zuvor bei Verfahrensschritt 304 eingestellte Referenzwert erreicht worden ist. Es ist damit jedoch noch keine systemseitige Überprüfung erfolgt, die festgestellt hat, ob eine Konformität des empfangenen Messwertes mit der Messwertvorgabe gewährleistet ist. Bei Verwendung eines Drehmomentschlüssels kann ein solches Signal optional bei Erreichung des zuvor festgelegten Anzugsmoments als ein akustisches Signal und/oder ein elektronisches Signal und/oder auch als ein mechanisches Signal wie eine Vibration erzeugt werden. Bei Verwendung eines piezoelektrischen Sensors kann optional bei Erreichung des festgelegten Drucks beispielsweise eine spezifische elektrische Ladung zur Signalisierung erzeugt werden.

Dann empfängt ebenfalls gemäß Verfahrensschritt 306 das System 2 den von dem Prüfmittel gesendeten Messwert über eine Informationsschnittstelle. Das System 2 vergleicht bei Verfahrensschritt 307 den empfangenen Messwert mit der optional in einem Datenspeicher 33 hinterlegten Messwertvorgabe der entsprechend relevanten Messgröße, um festzustellen, ob eine Konformität des empfangenen Messwertes mit der Messwertvorgabe gewährleistet ist. D.h., dass bei dem Vergleich 307 das System 2 zur Entscheidungsfindung die Vergleichsdaten analysiert hinsichtlich einer Übereinstimmung zwischen empfangenen Messwert für die hergestellte Verbindung und der festgelegten Messwertvorgabe. Im Falle einer Übereinstimmung dokumentiert bei Verfahrensschritt 308 das System 2 die Installationshandlung als vollständige Verbindung mittels einer Kennzeichnung im Schaltplan, z. B. dem Schaltplan und/oder Elektroanschlussplan. Im Falle einer Abweichung oder Diskrepanz des empfangenen Messwertes zur der Messwertvorgabe, die durch das System 2 abweichend von dem signalisierten Ergebnis des Prüfmittels festgestellt werden kann, dokumentiert ebenfalls bei Verfahrensschritt 308 das System 2 für die entsprechende Verbindung eine Kennzeichnung, dass die Verbindung kontrollbedürftig ist. Die Dokumentation kann dabei zusätzlich eine Benachrichtigung des Benutzers umfassen, z. B. als ein akustisches Signal und/oder ein elektronisches Signal und/oder auch als ein mechanisches Signal, welches angibt, ob der empfangene Messwert und die festgelegten Messwertvorgabe übereinstimmen und/oder ob die Verbindung kontrollbedürftig ist. Optional hat der Benutzer die Möglichkeit, einen Kommentar oder eine Beanstandung zu hinterlegen. Ebenso kann im Falle einer manuellen Kennzeichnung einer Verbindung auf der Benutzeroberfläche durch den Benutzer vorzugsweise eine Kontrolle durch einen anderen Benutzer, beispielsweise dem Vorgesetzten oder Werksleiter, eingetragen und/oder angefordert werden. Somit wird eine entsprechende Verbindung als kontrollbedürftig gekennzeichnet.

Obwohl einige Aspekte im Zusammenhang mit einer Vorrichtung beschrieben wurden, ist es klar, dass diese Aspekte auch eine Beschreibung des entsprechenden Verfahrens darstellen, wobei ein Element oder eine Vorrichtung einem Verfahrensschritt oder einem Merkmal eines Verfahrensschritts entspricht. Analog dazu stellen Aspekte, die im Zusammenhang mit einem Verfahrensschritt beschrieben werden, auch eine Beschreibung eines entsprechenden Blocks oder Elements oder Merkmals eines entsprechenden Geräts dar.

Ausführungsformen der Erfindung können auf einem Computersystem implementiert werden. Bei dem Computersystem kann es sich um ein lokales Computergerät (z. B. Personalcomputer, Laptop, Tablet-Computer oder Mobiltelefon) mit einem oder mehreren Prozessoren und einem oder mehreren Speichergeräten handeln oder um ein verteiltes Computersystem (z. B. ein Cloud-Computersystem mit einem oder mehreren Prozessoren und einem oder mehreren Speichergeräten, die an verschiedenen Orten verteilt sind, z. B. bei einem lokalen Client und/oder einer oder mehreren entfernten Serverfarmen und/oder Datenzentren). Das Computersystem kann jede beliebige Schaltung oder Kombination von Schaltungen umfassen. In einer Ausführungsform kann das Computersystem einen oder mehrere Prozessoren beliebiger Art umfassen. Der hier verwendete Begriff "Prozessor" kann jede Art von Rechenschaltung bezeichnen, z. B. einen Mikroprozessor, einen Mikrocontroller, einen CISC-Mikroprozessor (Complex Instruction Set Computing), einen RISC-Mikroprozessor (Reduced Instruction Set Computing), einen VLlW-Mikroprozessor (Very Long Instruction Word), einen Grafikprozessor, einen digitalen Signalprozessor (DSP), einen Mehrkernprozessor, ein FPGA (Field Programmable Gate Array) oder jede andere Art von Prozessor oder Verarbeitungsschaltung. Andere Arten von Schaltkreisen, die im Computersystem enthalten sein können, können ein kundenspezifischer Schaltkreis, ein anwendungsspezifischer integrierter Schaltkreis (ASIC) oder ähnliches sein, wie z. B. ein oder mehrere Schaltkreise (z. B. ein Kommunikationsschaltkreis) zur Verwendung in drahtlosen Geräten wie Mobiltelefonen, Tablet-Computern, Laptop-Computern, Zwei-Wege-Funkgeräten und ähnlichen elektronischen Systemen. Das Computersystem kann eine oder mehrere Speichervorrichtungen enthalten, die ein oder mehrere für die jeweilige Anwendung geeignete Speicherelemente umfassen können, wie z. B. einen Hauptspeicher in Form eines Direktzugriffsspeichers (RAM), eine oder mehrere Festplatten und/oder ein oder mehrere Laufwerke, die Wechseldatenträger wie Compact Disks (CD), Flash-Speicherkarten, digitale Videodisks (DVD) und dergleichen verarbeiten. Das Computersystem kann auch ein Anzeigegerät, einen oder mehrere Lautsprecher und eine Tastatur und/oder ein Steuergerät enthalten, das eine Maus, einen Trackball, einen Touchscreen, ein Spracherkennungsgerät oder ein anderes Gerät umfassen kann, das es einem Systembenutzer ermöglicht, Informationen in das Computersystem einzugeben und Informationen von ihm zu empfangen.

Einige oder alle Verfahrensschritte können von einem Hardware-Gerät (oder unter Verwendung eines solchen) ausgeführt werden, wie z. B. einem Prozessor, einem Mikroprozessor, einem programmierbaren Computer oder einer elektronischen Schaltung. In einigen Ausführungsformen können einige oder mehrere der wichtigsten Verfahrensschritte von einem solchen Gerät ausgeführt werden.

Abhängig von bestimmten Implementierungsanforderungen können Ausführungsformen der Erfindung in Hardware oder in Software implementiert werden. Die Implementierung kann unter Verwendung eines nicht-übertragbaren Speichermediums wie eines digitalen Speichermediums, beispielsweise einer Diskette, einer DVD, einer Blu-Ray, einer CD, eines ROM, eines PROM, eines EPROM, eines EEPROM oder eines FLASH-Speichers erfolgen, auf dem elektronisch lesbare Steuersignale gespeichert sind, die mit einem programmierbaren Computersystem zusammenwirken (oder zusammenwirken können), so dass das jeweilige Verfahren durchgeführt wird. Daher kann das digitale Speichermedium computerlesbar sein.

Einige Ausführungsformen der Erfindung umfassen einen Datenträger mit elektronisch lesbaren Steuersignalen, die in der Lage sind, mit einem programmierbaren Computersystem zusammenzuarbeiten, so dass eines der hier beschriebenen Verfahren durchgeführt wird.

Im Allgemeinen können Ausführungsformen der vorliegenden Erfindung als Computerprogrammprodukt mit einem Programmcode implementiert werden, wobei der Programmcode zur Durchführung eines der Verfahren dient, wenn das Computerprogrammprodukt auf einem Computer läuft. Der Programmcode kann zum Beispiel auf einem maschinenlesbaren Träger gespeichert sein.

Andere Ausführungsformen umfassen das Computerprogramm zur Durchführung eines der hier beschriebenen Verfahren, das auf einem maschinenlesbaren Träger gespeichert ist.

Mit anderen Worten, eine Ausführungsform der vorliegenden Erfindung ist daher ein Computerprogramm mit einem Programmcode zur Durchführung eines der hierin beschriebenen Verfahren, wenn das Computerprogramm auf einem Computer läuft.

Eine weitere Ausführungsform der Erfindung umfasst eine Vorrichtung die so konfiguriert ist, dass sie bzw. es ein Computerprogramm zur Durchführung eines der hierin beschriebenen Verfahren an einen Empfänger überträgt (z. B. auf elektronischem oder optischem Weg). Bei dem Empfänger kann es sich beispielsweise um einen Computer, ein mobiles Gerät, ein Speichergerät oder dergleichen handeln. Die Vorrichtung kann zum Beispiel einen Dateiserver zur Übertragung des Computerprogramms an den Empfänger umfassen.

In einigen Ausführungsformen kann eine programmierbare Logikvorrichtung (z. B. ein feldprogrammierbares Gate-Array) verwendet werden, um einige oder alle Funktionen der hier beschriebenen Verfahren auszuführen. In einigen Ausführungsformen kann ein feldprogrammierbares Gate-Array mit einem Mikroprozessor zusammenarbeiten, um eines der hier beschriebenen Verfahren durchzuführen. Im Allgemeinen werden die Verfahren vorzugsweise von einem beliebigen Hardware-Gerät durchgeführt.

### Liste der Bezugszeichen

- 1: Maschine, Anlage
- 2: System
- 3: Mastermodul
- 4: Modul, Switch, Komponente, Verbindungsmodul
- 5: Gerät, Sensor, Aktor
- 6: Hub
- 8: Steuerungsvorrichtung, SPS
- 9: Schaltschrank

- 10: Installationselement
- 11: Identifikator
- 12: Identifikationsmittel, maschinenlesbarer Code
- 13: Energieversorgung

- 20: Computerprogramm
- 21: Bussystem
- 22: Detektionsvorrichtung

- 30: Vorrichtung
- 31: Computer
- 32: Benutzeroberfläche
- 33: Datenspeicher

- 41: Anzeigeelement
- 42: Anschlussstelle, Steckplatz

- 100: Verfahren
- 101: erster Verfahrensschritt
- 102: zweiter Verfahrensschritt
- 103: dritter Verfahrensschritt

- 200: Installationsvorgabe
- 301: Nutzeranmeldung
- 302: Projektauswahl
- 303: Beginn
- 304: Einstellung Referenzwert (Anzugsmoment, Druck)
- 305: Erfassung Messwert
- 306: Empfangen Messwert
- 307: Vergleich Messwert mit Vorgabe
- 308: Dokumentieren

## Patentansprüche

1. Ein Verfahren (100) zur computer-gestützten Prüfung und Dokumentation einer Installationshandlung eines Benutzers zur Installation von räumlich dezentral angeordneten, elektrischen Komponenten (4) einer Maschine (1), wobei eine vollständige Herstellung einer elektrischen und/oder mechanischen Verbindung eines Installationselements (10) mit einer der elektrischen Komponenten (4) geprüft und dokumentiert wird, wobei das Verfahren (100) die nachfolgenden Schritte umfasst:
Empfangen (101) wenigstens eines Messwertes von einem Prüfmittel, wobei der wenigstens eine Messwert aus einer Erfassung einer Messgröße resultiert, welche für die Installationshandlung spezifisch ist,
Validieren (102) der Installationshandlung des Benutzers hinsichtlich der vollständigen Herstellung der elektrischen und/oder mechanischen Verbindung des Installationselements (10), auf Basis eines Vergleichs des wenigstens einen empfangenen Messwertes mit mindestens einer Messwertvorgabe, um festzustellen, ob eine Konformität des wenigstens einen empfangenen Messwertes mit der mindestens einen Messwertvorgabe gewährleistet ist; und
Dokumentieren (103) der validierten Installationshandlung basierend auf dem Validieren dadurch, dass eine Kennzeichnung für die Verbindung in einer Installationsvorgabe (200) vorgenommen wird, nämlich in einem Schaltplan, wobei bei dem Dokumentieren (103) der validierten Installationshandlung die Kennzeichnung in Abhängigkeit von einem Ergebnis des Validierens (102) definiert wird, und ein Vorliegen und/oder ein Ausmaß der Herstellung der elektrischen und/oder mechanischen Verbindung und/oder einer fehlerhafte und/oder von einer Vorgabe abweichenden Durchführung der Installationshandlung angibt.

2. Das Verfahren (100) nach Anspruch 1, wobei der Schritt des Validierens (102) die nachfolgenden Schritte umfasst:
Auswerten des Vergleichs des wenigstens einen empfangenen Messwertes mit der mindestens einen Messwertvorgabe; und
Definieren eines Ergebnisses des Validierens (102) basierend auf dem Auswerten des Vergleichs, wobei das Ergebnis die vollständige Herstellung oder eine unvollständige Herstellung der elektrischen und/oder mechanischen Verbindung des Installationselements (10) und/oder eine fehlerhafte und/oder von einer Vorgabe abweichende Durchführung der Installationshandlung indiziert und/oder quantifiziert;
wobei bei dem Dokumentieren (103) der validierten Installationshandlung die Kennzeichnung für die Verbindung in der Installationsvorgabe (200) basierend auf dem Ergebnis des Validierens (102) vorgenommen wird.

3. Das Verfahren (100) nach einem der vorhergehenden Ansprüche, wobei das Dokumentieren (103) der validierten Installationshandlung die nachfolgenden Schritte umfasst, welche nur dann ausgeführt werden, wenn das Ergebnis des Validierens (102) die vollständige Herstellung der elektrischen und/oder mechanischen Verbindung des Installationselements (10) und/oder eine ordnungsgemäße Durchführung der Installationshandlung indiziert:
Identifizieren einer Anschlussstelle (42), durch welche die elektrische und/oder mechanische Verbindung durch die Installationshandlung hergestellt wurde, in der Installationsvorgabe (200);
Hinterlegen der Kennzeichnung als eine Kennzeichnung der identifizierten und ordnungsgemäß verbundenen Anschlussstelle (42) in der Installationsvorgabe (200), basierend auf einem vom Benutzer erfassten Installationsparameter, insbesondere einem Anlass oder Grund der Kennzeichnung, wobei eine Angabe zum Anlass oder Grund der Kennzeichnung mit hinterlegt wird.

4. Das Verfahren (100) nach einem der vorhergehenden Ansprüche, wobei das Dokumentieren (103) der validierten Installationshandlung die nachfolgenden Schritte umfasst, welche durchgeführt werden, wenn ein Ergebnis des Validierens eine unvollständige Herstellung und/oder fehlerhafte und/oder von einer Vorgabe abweichende Durchführung der Installationshandlung indiziert:
Identifizieren einer Anschlussstelle (42), durch welche die Verbindung durch die Installationshandlung hergestellt wurde, in der Installationsvorgabe (200); Hinterlegen der Kennzeichnung der Anschlussstelle (42) als kontrollbedürftig in der Installationsvorgabe (200), basierend auf einem vom Benutzer erfassten Installationsparameter, insbesondere einer Beanstandung, einem Anlass oder Grund der Kennzeichnung, wobei eine Angabe zum Anlass oder Grund der Kennzeichnung mit hinterlegt wird.

5. Das Verfahren (100) nach einem der vorhergehenden Ansprüche, wobei ein weiterer Vergleich zwischen dem wenigstens einen empfangenen Messwert und zumindest zwei weiteren Messwertvorgaben als zusätzliche Prüfbedingung stattfindet, um festzustellen, ob eine Konformität des wenigstens einen empfangenen Messwertes mit einer Vorgabe unter Berücksichtigung der zusätzlichen Prüfbedingung gewährleistet ist, wobei die Kennzeichnung für die Verbindung in der Installationsvorgabe (200) basierend auf dem weiteren Vergleich vorgenommen wird.

6. Das Verfahren (100) nach einem der vorhergehenden Ansprüche, wobei das Dokumentieren (103) der validierten Installationshandlung wenigstens eine Hinterlegung einer Angabe zum Zeitpunkt der ordnungsgemäßen Installationshandlung hinsichtlich der Herstellung der Verbindung mit einer Anschlussstelle (42), zu einem Identifikator (11) des Installationselements (10) und/oder zu einer Kennung des Benutzers umfasst.

7. Das Verfahren (100) nach einem der vorhergehenden Ansprüche, wobei das Prüfmittel ein Drehmomentschlüssel ist, um die Erfassung des Messwerts durch die Installationshandlung bereitzustellen.

8. Das Verfahren (100) nach einem der vorhergehenden Ansprüche, wobei das Prüfmittel ein piezoelektrischer Sensor ist, wobei der piezoelektrische Sensor als Teil einer Steckverbindung integriert angeordnet ist, um die Erfassung des Messwerts durch die Installationshandlung bereitzustellen.

9. Das Verfahren (100) nach einem der vorhergehenden Ansprüche, wobei das Validieren (102) und/oder das Dokumentieren (103) der validierten Installationshandlung durch das Empfangen (101) des wenigstens einen Messwertes und/oder durch das Prüfmittel initiiert wird.

10. Das Verfahren (100) nach einem der vorhergehenden Ansprüche, wobei das Validieren (102) und/oder das Dokumentieren (103) der validierten Installationshandlung durch eine Benutzerhandlung initiiert wird.

11. Das Verfahren (100) nach einem der vorhergehenden Ansprüche, wobei das Prüfmittel ein Werkzeug ist, mit welchem die Installationshandlung durch den Benutzer vorgenommen wird, um die mechanische und/oder elektrische Verbindung herzustellen, oder wobei das Prüfmittel ein zusätzliches Werkzeug ist, welches zusätzlich zur Installationshandlung zur Prüfung der Installationshandlung verwendet wird.

12. Das Verfahren (100) nach einem der vorhergehenden Ansprüche, wobei die Schritte für mehrere Installationshandlungen wiederholt durchgeführt werden, um sukzessive die gesamte Installation der Maschine (1) zu dokumentieren.

13. Ein Computerprogramm (20), umfassend Befehle, die bei der Ausführung des Computerprogramms (20) durch einen Computer (31) diesen veranlassen, das Verfahren (100) nach einem der vorhergehenden Ansprüche auszuführen.

14. Eine Vorrichtung (30) zur Datenverarbeitung, die eingerichtet ist, das Verfahren (100) nach einem der Ansprüche 1 bis 12 auszuführen.

## Claims

1. A method (100) for a computer-aided testing and documentation of an installation action of a user for an installation of spatially decentralized electrical components (4) of a machine (1), wherein a complete establishment of an electrical and/or mechanical connection of an installation element (10) to one of the electrical components (4) is tested and documented, the method (100) comprising the following steps:
Receiving (101) at least one measured value from a testing means, wherein the at least one measured value results from a detection of a measured variable which is specific to the installation action,
Validating (102) the installation action of the user with regard to the complete establishment of the electrical and/or mechanical connection of the installation element (10), based on a comparison of the at least one received measured value with at least one measured value specification, in order to determine whether a conformity of the at least one received measured value with the at least one measured value specification is ensured; and
Documenting (103) the validated installation action based on the validating in that a marking for the connection is provided in an installation specification (200), namely in a circuit diagram, wherein during documenting (103) the validated installation action the marking is defined depending on a result of the validating (102), and indicates a presence and/or an extent of the establishment of the electrical and/or mechanical connection and/or a faulty and/or deviating performance of the installation action from a specification.

2. The method (100) according to claim 1, wherein the step of validating (102) comprises the following steps:
Evaluating the comparison of the at least one received measured value with the at least one measured value specification; and
Defining a result of the validation (102) based on the evaluation of the comparison, wherein the result indicates and/or quantifies the complete establishment or an incomplete establishment of the electrical and/or mechanical connection of the installation element (10) and/or a faulty and/or deviating performance of the installation action;
wherein during documenting (103) the validated installation action, the marking for the connection in the installation specification (200) is provided based on the result of the validation (102).

3. The method (100) according to one of the preceding claims, wherein the documenting (103) of the validated installation action comprises the following steps, which are only performed if the result of the validating (102) indicates the complete establishment of the electrical and/or mechanical connection of the installation element (10) and/or a proper performance of the installation action:
Identifying a connection point (42), through which the electrical and/or mechanical connection was established by the installation action, in the installation specification (200);
Storing the marking as a marking of the identified and properly connected connection point (42) in the installation specification (200), based on an installation parameter recorded by the user, in particular an occasion or reason for the marking, wherein an indication of the occasion or reason for the marking is also stored.

4. The method (100) according to any one of the preceding claims, wherein the documenting (103) of the validated installation action comprises the following steps, which are performed when a result of the validating indicates an incomplete manufacturing and/or faulty and/or deviating from a specification performance of the installation action:
Identifying a connection point (42) through which the connection was established by the installation action in the installation specification (200);
Storing the marking of the connection point (42) as requiring inspection in the installation specification (200), based on an installation parameter recorded by the user, in particular an objection, an occasion or reason for the marking, whereby an indication of the occasion or reason for the marking is also stored.

5. The method (100) according to any one of the preceding claims, wherein a further comparison between the at least one received measured value and at least two further measured value specifications takes place as an additional test condition to determine whether a conformity of the at least one received measured value with a specification is ensured taking into account the additional test condition, wherein the marking for the connection in the installation specification (200) is provided based on the further comparison.

6. The method (100) according to any one of the preceding claims, wherein the documenting (103) of the validated installation action comprises at least depositing an indication at the time of the proper installation action with respect to the establishment of the connection to a connection point (42), to an identifier (11) of the installation element (10) and/or to an identifier of the user.

7. The method (100) according to any one of the preceding claims, wherein the testing means is a torque wrench to provide the acquisition of the measured value by the installation action.

8. The method (100) according to any one of the preceding claims, wherein the testing means is a piezoelectric sensor, wherein the piezoelectric sensor is arranged integrated as part of a plug connection to provide the detection of the measured value by means of the installation action.

9. The method (100) according to any one of the preceding claims, wherein the validating (102) and/or the documenting (103) of the validated installation action is initiated by receiving (101) the at least one measured value and/or by the testing means.

10. The method (100) according to any one of the preceding claims, wherein the validating (102) and/or the documenting (103) of the validated installation action is initiated by a user action.

11. The method (100) according to any one of the preceding claims, wherein the testing means is a tool with which the installation action is performed by the user to establish the mechanical and/or electrical connection, or wherein the testing means is an additional tool used in addition to the installation action to test the installation action.

12. The method (100) according to any of the preceding claims, wherein the steps for several installation actions are performed repeatedly in order to successively document the entire installation of the machine (1).

13. A computer program (20), comprising instructions which, when the computer program (20) is executed by a computer (31), cause the computer (31) to execute the method (100) according to any of the preceding claims.

14. A data processing device (30), which is adapted to perform the method (100) according to any one of claims 1 to 12.

## Revendications

1. Procédé (100) de contrôle assisté par ordinateur et documentation d'une action d'installation d'un utilisateur pour installer des composants électriques (4) d'une machine (1) agencés de manière spatiale, dans lequel un établissement complet d'une connexion électrique et/ou mécanique d'un élément d'installation (10) avec l'un des composants électriques (4) est contrôlé et documenté, le procédé (100) comprenant les étapes suivantes :
réception (101) d'au moins une valeur de mesure provenant d'un moyen de contrôle, ladite au moins une valeur de mesure résultant d'une détection d'une grandeur de mesure qui est spécifique à l'action d'installation,
validation (102) de l'action d'installation de l'utilisateur en ce qui concerne l'établissement complet de la connexion électrique et/ou mécanique de l'élément d'installation (10), sur la base d'une comparaison de l'au moins une valeur de mesure reçue avec au moins une valeur de mesure prédéfinie, afin de déterminer si une conformité de l'au moins une valeur de mesure reçue avec l'au moins une valeur de mesure prédéfinie est garantie ; et
documentation (103) de l'action d'installation validée sur la base de la validation en ce qu'une identification pour la connexion est effectué dans une consigne d'installation (200), à savoir dans un schéma de câblage, dans lequel, lors de la documentation (103) de l'action d'installation validée, l'identification est défini en fonction d'un résultat de la validation (102) et indique une présence et/ou une étendue de l'établissement de la connexion électrique et/ou mécanique et/ou une exécution erronée et/ou différente d'une consigne de l'action d'installation.

2. Procédé (100) selon la revendication 1, dans lequel l'étape de validation (102) comprend les étapes suivantes :
évaluation de la comparaison de l'au moins une valeur de mesure reçue avec l'au moins une valeur de mesure prédéfinie ; et
définition d'un résultat de la validation (102) sur la base de l'évaluation de la comparaison, le résultat indiquant et/ou quantifiant l'établissement complet ou un établissement incomplet de la connexion électrique et/ou mécanique de l'élément d'installation (10) et/ou une exécution erronée et/ou différente d'une consigne de l'action d'installation ;
dans lequel, lors de la documentation (103) de l'action d'installation validée, l'identification pour la connexion dans la consigne d'installation (200) est effectué sur la base du résultat de la validation (102).

3. Procédé (100) selon l'une des revendications précédentes, dans lequel la documentation (103) de l'action d'installation validée comprend les étapes suivantes, qui ne sont exécutées que si le résultat de la validation (102) indique l'établissement complet de la connexion électrique et/ou mécanique de l'élément d'installation (10) et/ou une exécution correcte de l'action d'installation :
identification, dans la consigne d'installation (200), d'un point de connexion (42) par lequel la connexion électrique et/ou mécanique a été établie par l'action d'installation ;
enregistrement de l'identification en tant qu'identification du point de connexion (42) identifié et correctement connecté dans la consigne d'installation (200), sur la base d'un paramètre d'installation saisi par l'utilisateur, en particulier un motif ou une raison de l'identification, une indication du motif ou de la raison de l'identification étant également enregistrée.

4. Procédé (100) selon l'une des revendications précédentes, dans lequel la documentation (103) de l'action d'installation validé comprend les étapes suivantes, qui sont exécutées lorsqu'un résultat de la validation indique un établissement incomplet et/ou une exécution erronée et/ou différente d'une consigne de l'action d'installation :
identification d'un point de connexion (42), par lequel la connexion a été établie par l'action d'installation, dans la consigne d'installation (200) ;
enregistrement de l'identification du point de connexion (42) comme nécessitant un contrôle dans la consigne d'installation (200), sur la base d'un paramètre d'installation saisi par l'utilisateur, en particulier d'une réclamation, d'un motif ou d'une raison de l'identification, une indication du motif ou de la raison de l'identification étant également enregistrée.

5. Procédé (100) selon l'une des revendications précédentes, dans lequel une autre comparaison entre l'au moins une valeur de mesure reçue et au moins deux autres valeurs de mesure prédéfinies a lieu en tant que condition de contrôle supplémentaire pour déterminer si une conformité de l'au moins une valeur de mesure reçue avec une valeur prédéfinie est garantie en tenant compte de la condition de contrôle supplémentaire, dans lequel l'identification pour la connexion dans la consigne d'installation (200) est effectué sur la base de l'autre comparaison.

6. Procédé (100) selon l'une des revendications précédentes, dans lequel la documentation (103) de l'action d'installation validée comprend au moins un enregistrement d'une indication sur le moment de l'action d'installation correcte en ce qui concerne l'établissement de la connexion avec un point de connexion (42), sur un identifiant (11) de l'élément d'installation (10) et/ou sur un identifiant de l'utilisateur.

7. Procédé (100) selon l'une des revendications précédentes, dans lequel le moyen de contrôle est une clé dynamométrique pour fournir la détection de la valeur mesurée par l'action d'installation.

8. Procédé (100) selon l'une des revendications précédentes, dans lequel le moyen de contrôle est un capteur piézoélectrique, le capteur piézoélectrique étant disposé de manière intégrée en tant que partie d'un connecteur pour fournir la détection de la valeur mesurée par l'action d'installation.

9. Procédé (100) selon l'une des revendications précédentes, dans lequel la validation (102) et/ou la documentation (103) de l'action d'installation validée est initiée par la réception (101) de ladite au moins une valeur de mesure et/ou par le moyen de contrôle.

10. Procédé (100) selon l'une des revendications précédentes, dans lequel la validation (102) et/ou la documentation (103) de l'action d'installation validée est initiée par une action de l'utilisateur.

11. Procédé (100) selon l'une des revendications précédentes, dans lequel le moyen de contrôle est un outil avec lequel l'action d'installation est effectuée par l'utilisateur pour établir la connexion mécanique et/ou électrique, ou dans lequel le moyen de contrôle est un outil supplémentaire utilisé en plus de l'action d'installation pour contrôler l'action d'installation.

12. Procédé (100) selon l'une des revendications précédentes, dans lequel les étapes sont répétées pour plusieurs actions d'installation afin de documenter successivement l'ensemble de l'installation de la machine (1).

13. Programme informatique (20) comprenant des instructions qui, lorsque le programme informatique (20) est exécuté par un ordinateur (31), amènent ce dernier à mettre en oeuvre le procédé (100) selon l'une des revendications précédentes.

14. Dispositif (30) de traitement de données adapté pour mettre en oeuvre le procédé (100) selon l'une des revendications 1 à 12.
